**Europäisches Patentamt**

**European Patent Office**

**Office européen des brevets**

(19)

(11) Numéro de publication: **0 129 672**
**B1**

(12) # FASCICULE DE BREVET EUROPÉEN

(45) Date de publication du fascicule du brevet:
**29.06.88**

(51) Int. Cl.⁴: **F 16 B 12/20, A 47 B 57/54**

(21) Numéro de dépôt: **84104771.5**

(22) Date de dépôt: **27.04.84**

(54) **Dispositif d'assemblage d'éléments de construction notamment d'éléments de construction en bois.**

(30) Priorité: **28.04.83 FR 8307046**

(43) Date de publication de la demande:
**02.01.85 Bulletin 85/1**

(45) Mention de la délivrance du brevet:
**29.06.88 Bulletin 88/26**

(84) Etats contractants désignés:
**AT BE CH DE FR GB IT LI LU NL SE**

(56) Documents cité:
**LU-A-81 874**
**US-A-3 458 052**

(73) Titulaire: **Renaud- Goud, Louis Antoine, "Le Malod" Avressieux, F-73240 Saint Genix sur Guiers (FR)**

(72) Inventeur: **Renaud- Goud, Louis Antoine, "Le Malod" Avressieux, F-73240 Saint Genix sur Guiers (FR)**

(74) Mandataire: **Casalonga, Axel, BUREAU D.A. CASALONGA OFFICE JOSSE & PETIT Morassistrasse 8, D-8000 München 5 (DE)**

EP 0 129 672 B1

LIBER, STOCKHOLM 1988

## Description

La présente invention concerne un dispositif d'assemblage d'éléments de construction et notamment d'éléments de construction en bois en vue de bâtir des meubles tels que tables, armoires ou étagères.

Actuellement, les dispositifs d'assemblage utilisés pour le montage de deux éléments d'un ensemble d'éléments devant constituer notamment une étagère comprennent deux parties qui sont fixées, la plupart du temps, par des vis, respectivement sur ces deux éléments. Il s'avère qu'à l'usage ces deux parties ne restent pas solidement ancrées sur les deux éléments et qu'en fin de compte ces deux éléments prennent du jeu l'un par rapport à l'autre. En outre, les dispositifs d'assemblage de ce genre nécessitent, lors des assemblages, plusieurs manoeuvres.

Par le brevet US-A-3 458 052, on connaît par ailleurs un dispositif d'assemblage de deux profilés comprenant un tirant monté sur l'un des profilés et actionnable à l'aide d'un excentrique et dont l'extrémité est disposé dans une rainure longitudinale de l'autre profilé et présente deux nervures opposées qui permettent le pincement de deux rebords longitudinaux opposés de ce profilé. Dans cette réalisation cependant, les nervures d'extrémité du tirant s'étendent perpendiculairement au sens de déplacement de ce dernier de telle sorte que le tirant ne peut pas participer au positionnement des deux profilés l'un par rapport à l'autre.

La présente invention a pour but de remédier aux inconvénients des techniques actuellement utilisées pour l'assemblage d'éléments de construction et propose un dispositif d'assemblage de construction simple, nécessitant peu de manoeuvres tout en maintenant les deux éléments de construction solidement.

Le dispositif d'assemblage d'un premier élément de construction et d'un second élément de construction formé par un profilé, objet de la présente invention, comprend d'une part un tirant présentant une partie formant âme adaptée pour être montée coulissante dans un évidement dudit premier élément de construction et une partie d'extrémité extérieure audit évidement et portant deux nervures opposées faisant saillie latéralement, ledit second élément de construction présentant une rainure longitudinale déterminant deux rebords longitudinaux susceptibles d'être disposés entre les nervures dudit tirant et la paroi dudit premier élément adjacente audit évidement, et d'autre part un axe adapté pour être disposé dans un évidement latéral dudit premier élément s'étendant latéralement audit évidement et présentant une partie excentrée pénétrant dans un passage transversal de ladite partie formant âme dudit tirant et susceptible de coopérer avec la paroi de ce passage pour déplacer, par rotation dudit axe dans ledit évidement transversal, ledit tirant vers l'intérieur dudit évidement de manière à pincer lesdits rebords dudit second élément entre lesdites nervures et ladite paroi dudit premier élément et ainsi maintenir lesdits éléments de construction assemblés.

Conformément à la présente invention, les deux nervures latérales d'extrémité dudit tirant forment, avec son âme, un X et la rainure longitudinale dudit second élément déterminant lesdits rebords est en forme de V.

Selon la présente invention, lesdits rebords longitudinaux dudit second élément forment de préférence des nervures longitudinales susceptibles de pénétrer dans des gorges dudit premier élément de forme complémentaire. Dans une variante, lesdits rebords longitudinaux dudit second élément forment des nervures longitudinales de section en forme de V susceptibles de pénétrer dans des gorges dudit premier élément de forme complémentaire. De la sorte, il se produit entre la surface d'appui dudit premier élément et les nervures dudit tirant un effet de coincement important des rebords longitudinaux dudit second élément.

Selon la présente invention, ladite partie formant âme dudit tirant peut comprendre au moins une nervure adaptée pour être disposée dans une rainure dudit premier élément, cette rainure et cette nervure s'étendant dans le sens de déplacement dudit tirant.

Selon la présente invention, ladite partie formant âme dudit tirant peut être adaptée pour être montée dans un évidement longitudinal prévu à l'extrémité d'un profilé constituant ledit premier élément. Dans une variante, ladite partie dudit tirant peut comprendre au moins une nervure adaptée pour être disposée dans une rainure longitudinale dudit profilé.

Selon la présente invention, l'extrémité de ce profilé peut comprendre, dans cette variante, deux branches délimitant ledit évidement.

Selon la présente invention, ledit tirant peut comprendre au moins une partie déformable élastiquement dans le sens de son déplacement et adaptée pour prendre appui sur une paroi dudit évidement en vue de déplacer ledit tirant vers l'extérieur dudit évidement. Dans une variante, cette partie déformable élastiquement peut comprendre au moins un doigt s'étendant sensiblement transversalement et susceptible devenir en appui contre la paroi de fond dudit évidement.

Dans une variante de réalisation complémentaire, ledit axe peut comprendre deux parties cylindriques reliées par une partie excentrée cylindrique de plus petit diamètre et ledit passage transversal dudit tirant peut être prévu cylindrique pour recevoir, de chaque côté dudit évidement longitudinal, lesdites parties cylindriques dudit axe, ledit passage transversal dudit tirant présentant dans le sens du déplacement de ce dernier une partie en saillie vers l'intérieur venant en contact sur la partie excentrée dudit axe de telle sorte que par rotation dudit axe ledit tirant peut être déplacé vers l'extérieur dudit évidement, tandis que l'une des parties cylindriques dudit axe présente une rainure longitudinale, de telle sorte que cette partie cylindrique rainurée peut traverser ledit passage cylindrique dudit tirant pour disposer la partie excentrée dudit axe dans ce passage transversal. Ainsi, lors de la rotation dudit axe dans l'évidement transversal dudit premier élément, ledit tirant peut être déplacé dans l'évidement du premier élément dans les deux sens.

Selon la présente invention, la partie excentrée dudit axe et ledit passage dudit tirant peuvent présenter respectivement au moins une partie creuse et une partie en saillie situées du côté opposé auxdites nervures d'extrémité dudit tirant, ces parties étant adaptées pour pénétrer l'une dans l'autre en vue de verrouiller ledit axe par rapport au tirant.

La présente invention se rapporte également à un profilé adapté pour recevoir l'extrémité nervurée du tirant du dispositif d'assemblage ci-dessus. Ce profilé est tel que ladite rainure longitudinale en forme de V délimitant les deux rebords longitudinaude section en forme de V est ménagée au sommet de deux flancs adjacents de ce profilé, la paroi de l'une des branches de ladite rainure longitudinale en forme de V opposée au rebord longitudinal adjacent étant dans le prolongement de la paroi de l'autre rebord longitudinal adjacente à son autre branche. Dans une variante, les branches de ladite rainure longitudinale en forme de V sont parallèles audit flanc adjacent.

Conformément à la présente invention, ce profilé peut comprendre, au moins à l'une de ces extrémités, deux branches délimitant ledit évidement recevant l'âme dudit tirant, les extrémités de ces branches présentant chacune une rainure parallèle à cet évidement et de section en forme de V, qui est complémentaire de la section en forme de V desdits rebords longitudinaux.

La présente invention sera mieux comprise à l'étude de dispositifs d'assemblage d'éléments de construction, qui, dans ce cas, sont en bois, décrits à titre d'exemples non limitatifs et illustrés par le dessin sur lequel:
- la figure 1 représente deux dispositifs d'assemblage identiques destinés au montage de deux éléments de construction constitués par des profilés perpendiculairement sur un troisième élément de construction constitué également par un profilé, l'un étant en position de montage et l'autre étant en position montée, en coupe selon l'axe des deux premiers profilés;
- la figure 2 montre une coupe transversale selon II-II de l'un des deux premiers profilés;
- la figure 3 montre une coupe axiale selon III-III du profilé en position de montage représenté sur la figure 1;
- la figure 4 montre une coupe axiale selon IV-IV du profilé en position monté représenté sur la figure 1;
- la figure 5 représente une vue en coupe correspondant aux figures 1 et 2 d'un autre dispositif d'assemblage;
- et la figure 6 représente une vue en coupe correspondant aux figures 3 et 4 du dispositif d'assemblage représenté sur la figure 5.

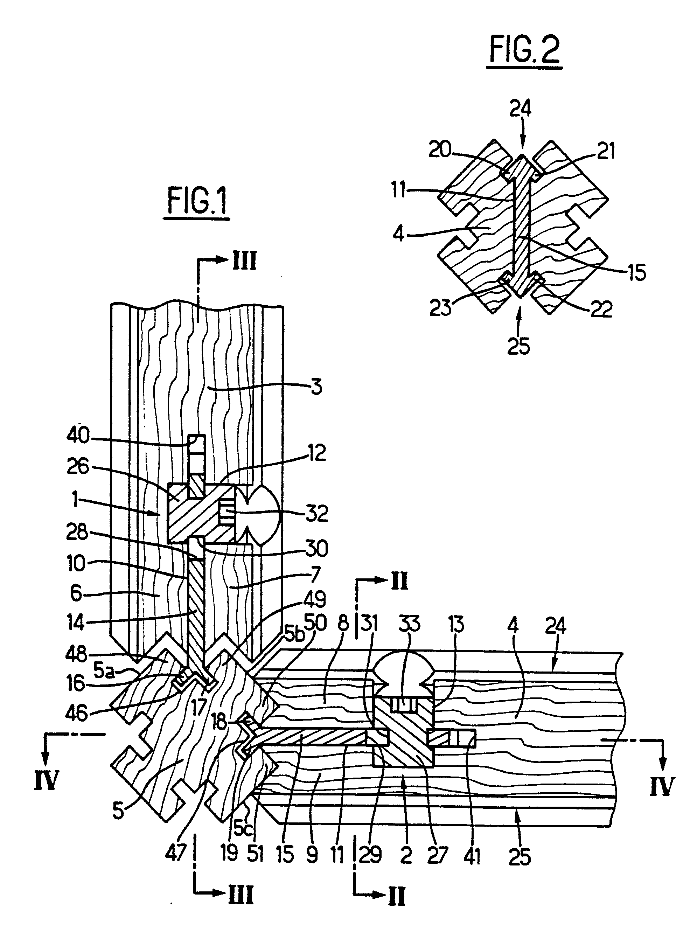

En se reportant notamment à la figure 1, on voit qu'on a représenté deux dispositifs d'assemblage repérés d'une manière générale par les références 1 et 2 destinés respectivement au montage de deux profilés 3 et 4 sur un troisième profilé 5, orthogonalement, en vue de constituer au moins en partie la structure d'un meuble tel qu'une étagère.

Les extrémités des profilés 3 et 4 comprennent respectivement deux branches 6, 7 et 8, 9 qui déterminent entre elles des évidements 10 et 11 qui s'étendent axialement et qui présentent deux faces axiales parallèles.

Les profilés 3 et 4 présentent également, respectivement, des évidements cylindriques transversaux 12 et 13 qui traversent leurs branches 7 et 8 et qui s'étendent en partie dans leurs branches 6 et 9.

Les dispositifs d'assemblage 1 et 2 comprennent respectivement des tirants 14 et 15 dont le corps ou âme est de section rectangulaire et s'étend dans les évidements 10 et 11 des profilés 3 et 4 entre leurs branches 6, 7 et 7, 9.

Les extrémités des tirants 14 et 15, extérieures aux évidements 10 et 11 présentent respectivement des nervures 16, 17 et 18, 19 qui s'étendent transversalement aux profilés 3 et 4 et de part et d'autre de manière à former, avec le corps des tirants 14 et 15, des Y.

Comme on le voit bien sur la figure 2, les bords longitudinaux du corps du tirant 15 présentent respectivement des nervures longitudinales 20, 21 et 22, 23 qui s'étendent dans des rainures longitudinales repérées d'une manière générale par les références 24 et 25, de formes complémentaires, de telle sorte que le tirant 15 peut être guidé longitudinalement au profilé 4. Le tirant 14 présente des nervures et le profilé 3 présente des rainures de manière équivalente.

Dans des évidements transversaux 12 et 13 des profilés 3 et 4 sont disposés respectivement des axes cylindriques 26 et 27 qui s'étendent respectivement au travers de passages transversaux cylindriques 28 et 29 du corps des tirants 14 et 15 et qui présentent respectivement des parties cylindriques excentrées 30 et 31 s'étendant entre deux parties cylindriques et susceptibles de venir respectivement en appui contre la paroi des passages 28 et 29.

Du côté ouvert des évidements 12 et 13 des profilés 3 et 4, les axes 26 et 27 présentent des évidements profilés 32 et 33 susceptibles de recevoir l'extrémité d'une clé en vue de les faire tourner.

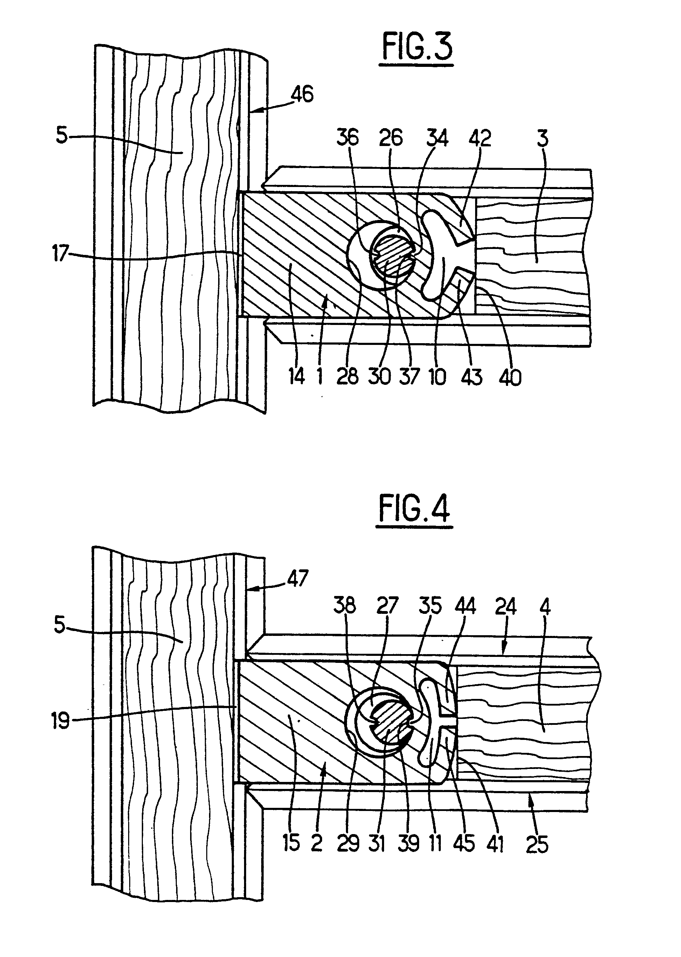

Comme on peut le voir sur les figures 3 et 4, les passages 28 et 29 des tirants 14 et 15 présentent, du côté opposé aux nervures 16, 17 et 18, 19, des saillies 34 et 35 et les parties excentrées 30 et 31 des axes 26 et 27 présentent des parties creuses correspondantes 36, 37 et 38, 39 diamétralement opposées.

A leur partie d'extrémité adjacente aux fonds transversaux 40 et 41 des évidements 10 et 11 des profilés 3 et 4, les tirants 14 et 15 présentent, respectivement, deux doigts 42, 43 et 44, 45 qui s'étendent l'un vers l'autre et qui prennent appui contre les fonds 40 et 41 des évidements 10 et 11 et qui sont déformables élastiquement dans le sens de déplacement des tirants 14 et 15 et qui, grâce à leur élasticité, permettent de déplacer les tirants 14 et 15 longitudinalement aux profilés 3 et 4 vers l'extérieur pour que la paroi des passages 28 et 29 des tirants 14 et 15 soit maintenue en contact contre les parties excentrées 30 et 31 des axes 26 et 27.

Comme on peut le voir en particulier sur la figure 1, le profilé 5 présente deux rainures longitudinales 46 et 47 en forme de V qui sont de forme complémentaire aux extrémités nervurées des tirants 14 et 15.

La rainure 46 détermine deux rebords longitudinaux 48 et 49 qui s'étendent entre les nervures d'extrémité 16 et 17 du tirant 14 et la paroi d'extrémité du profilé 3. De même, la rainure longitudinale 47 délimite deux rebords longitudinaux 50 et 51 qui s'étendent entre les nervures d'extrémité 18 et 19 du tirant 15 et la paroi d'extrémité du profilé 5.

Comme on peut le voir sur la figure 1, les rebords longitudinaux 48 et 49 et les rebords longitudinaux 50 et 51 du profilé 5 forment des nervures longitudinales de section en forme de V qui sont susceptibles de pénétrer dans des gores ou nervures de forme complémentaire ménagées aux extrémités des branches 6, 7 et 8, 9 des profilés 3 et 4 parallèlement aux évidements 10 et 11 et de part et d'autre.

En se reportant en particulier à la figure 1, on voit que la rainure longitudinale 46 du profilé 5 est réalisée au sommet de deux flancs adjacents perpendiculaires 5a et 5b de ce profilé. Les parois des deux branches formant la rainure longitudinale en forme de V 46 sont respectivement parallèles à ces flancs 5a et 5b, la paroi de l'une des branches de la rainure longitudinale en forme de V 46 opposée au rebord longitudinal adjacent de section en forme de V dont la pointe est dirigée vers le profilé et dont le sommet est égal à 90° étant dans le prolongement de la paroi de l'autre rebord longitudinal adjacent à son autre branche. De la sorte, la rainure longitudinale 46 et les rebords longitudinaux 48 et 49 peuvent être réalisés en exécutant deux traits de scie respectivement perpendiculaires aux flancs 5a et 5b du profilé 5. Bien entendu, la rainure longitudinale 47 formée au sommet des flancs adjacents 5b et 5c du profilé 5 ainsi que les rainures longitudinales opposées 24 et 25 du profilé 4 et les rainures correspondantes du profilé 3 sont, dans l'exemple, réalisées de la même manière, les nervures 20, 21 et 22, 23 du tirant 15, et les nervures correspondantes du tirant 14 s'étendant dans ces rainures longitudinales 24 et 25.

Les dispositifs d'assemblage représentés sur les figures 1 à 4 et décrits ci-dessus sont utilisables de la manière suivante.

Pour monter le dispositif d'assemblage 2 sur l'extrémité du profilé 5, on introduit le corps du tirant 15 dans l'évidement 11 en faisant coulisser ses nervures 20, 21 et 22, 23 dans les rainures longitudinales 24 et 25 du profilé 4. Lorsque les doigts 44 et 45 viennent en appui contre le fond 41 de l'évidement 11, en continuant à enfoncer le tirant 15 dans cet évidement, on déforme ces doigts. Lorsque le passage 29 arrive en face de l'évidement transversal 13, on dispose l'axe 27 dans cet évidement de telle sorte que sa partie excentrée 31 s'étende dans ce passage 29. On relâche le tirant 15 et la paroi du passage 29 du tirant 15 vient en appui contre cette partie excentrée 31 du fait que l'effort de rappel obtenu grâce aux doigts élastiques 44 et 45.

Le montage du dispositif d'assemblage 1 sur l'extrémité du profilé 3 peut être obtenu de la même manière.

Par rotation des axes 26 et 27, il est alors possible de disposer leurs parties excentrées 30 et 31 de telle sorte que les tirants 14 et 15, grâce à leurs doigts élastiques 42, 43 et 44 et 45, se trouvent dans une position sortie dans laquelle le dispositif d'assemblage 1 a été représenté sur les figures 1 et 3, les bossages 34 et 35 prévus dans les passages 28 et 29 des tirants 14 et 15 pénètrent alors dans les évidements en creux 37 et 38 des parties excentrées 30 et 31 des axes 26 et 27 de manière à verrouiller ces axes dans cette position.

On dispose les nervures d'extrémité 16, 17 et 18, 19 des tirants 14 et 15 dans les nervures longitudinales 46 et 47 du profilé 3 et on fait coulisser ces nervures jusqu'à disposer les profilés 3 et 4, longitudinalement au profilé 5 dans la position souhaitée.

A l'aide d'une clé, on fait tourner les axes 26 et 27 d'un demi-tour. Ce faisant, leurs parties excentrées 30 et 31 déplacent les tirants 14 et 15 vers l'intérieur des évidements 10 et 11 des profilés 3 et 4. Lorque ces axes ont pivotés d'un demi-tour, les rebords 48 et 49 du profilé 5 se trouvent pincés entre les nervures d'extrémité 16 et 17 du tirant 14 et la paroi d'extrémité du profilé 3 et les rebords 50 et 51 du profilé 5 se trouvent pincés entre les nervures d'extrémité 18 et 19 du tirant 15 et la paroi d'extrémité du profilé 4. Les bossages 34 et 35 prévus dans les passages 28 et 29 des tirants 14 et 15 se trouvent alors dans les parties évidées 36 et 39 des parties excentrées 30 et 31 des axes 26 et 27, ces axes se trouvant ainsi verrouillés. Les dispositifs d'assemblages se trouvent alors dans la position du dispositif d'assemblage 2 représenté sur les figures 1 et 4.

Les profilés 3 et 4 se trouvent ainsi assemblés au profilé 5.

Comme on peut le voir sur la figure 1, les rebords 50 et 51 du profilé 5 qui forment des nervures longitudinales pénètrent dans des rainures complémentaires pratiquées à l'extrémité du profilé 4, empêchant ainsi tout mouvement de rotation ou de déplacement latéral des profilés 4 et 5 l'un par rapport à l'autre. Il en est de même pour les profilés 3 et 5 en position montée.

Lorsque l'on souhaite changer la position des profilés 3 et 4 par rapport au profilé 5 ou lorsque l'on souhaite démonter ces profilés, il suffit d'effectuer les opérations inverses, les doigts élastiques 42, 43 et 44, 45 rappelant vers l'extérieur les tirants 14 et 15.

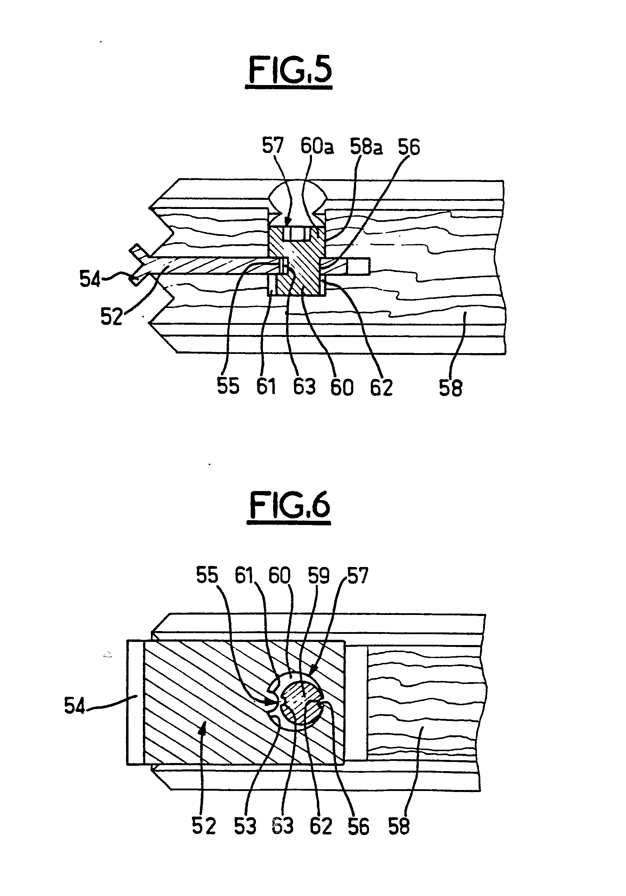

En se reportant aux figures 5 et 6, on voit qu'on a représente une variante de réalisation des tirants et des axes précèdemment décrits. Dans cette variante, le tirant repéré d'une manière générale par la référence 52, à la différence des tirants 1 et 2 décrits précédemment, ne comprend plus de doigt de rappel. Dans son passage transversal cylindrique 53 sont prévues, diamétralement opposées, du côté de l'extrémité 54 du tirant 52 portant les nervures en forme de Y, une nervure 55 qui s'étend vers l'intérieur et, à l'opposé, une nervure 56 qui s'étend également vers l'intérieur. L'axe 57 associé au tirant 52 présente, comme dans les exemples précédents, deux parties cylindriques 60 et 60a s'étendant dans un évidement transversal cylindrique 58a du profilé 58 qui le porte et qui sont reliées par une partie cylindrique excentrée qui s'étend dans le passage 53 du tirant 52. A l'opposé de sa partie excentrée 59, la partie cylindrique 60 de l'axe 57 qui s'étend dans le fond de l'évidement transversal du profilé 58 présente une raiure 61 de forme complémentaire à la nervure 55 prévue dans le passage 53. A l'opposé de cette rainure 61, la partie excentrée 59 et la partie cylindrique 60 de l'axe 57 présente une rainure 62 dont la forme correspond à la forme de la nervure 56 prévue dans le passage 53. La partie excentrée 59 de l'axe 57 présente également une rainure 63 diamétralement opposée à la rainure 62 et dont la forme correspond également à la nervure 56 du passage 53.

Grâce à la nervure 55 prévue dans le passage 53, qui limite le déplacement de la partie excentrée 59 dans le passage transversal 53, le déplacement du tirant 52 longitudinalement au profilé 58 dans un sens ou dans l'autre peut être assuré par rotation de l'axe 57. Les rainures 62 et 63 de la partie excentrée 59 peuvent coopérer avec la nervure 56 prévue dans le passage 53 du tirant 52 pour verrouiller l'axe 57 par rapport au tirant 52 dans sa position rentrée et dans sa position sortie. Comme la partie cylindrique 60 de l'axe 57 présente ses deux rainures 61 et 62, cette partie cylindrique 60 peut traverser le passage 53 du tirant 52 de telle sorte que l'axe 57 peut être monté lorsque ses rainures 61 et 62 sont en face des nervures 55 et 56 prévues dans le passage transversal 53 pour placer sa partie excentrée 59 dans le passage transversal 53, et inversement.

**Revendications**

1. Dispositif d'assemblage d'un premier élément de construction (4) sur un second élément de construction (5) formé par un profilé présentant une rainure longitudinale (47) déterminant deux rebords longitudinaux (50, 51) comprenant un tirant (15) présentant une partie formant âme adaptée pour être montée coulissante dans un évidement (11) dudit premier élément de construction (4) et une partie d'extrémité extérieure audit évidement portant deux nervures opposées (18, 19) faisant saillie latéralement et disposée dans la rainure longitudinale (47) dudit second élément (5) ainsi qu'un axe (27) adapté pour être disposé dans un évidement latéral (13) dudit premier élément (4) s'étendant latéralement audit évidement (11) et présentant une partie excentrée (31) pénétrant dans un passage transversal (29) de la partie formant âme dudit tirant (15) et susceptible de déplacer, par rotation dudit axe (27) dans ledit évidement transversal (13), ledit tirant vers l'intérieur dudit évidement (11) de manière à pincer lesdits rebords longitudinaux (50, 51) dudit second élément (5) entre les nervures (18, 19) dudit tirant et la paroi dudit premier élément (4) en vue de maintenir lesdits éléments de construction (4, 5) assemblés, caractérisé par le fait que les deux nervures latérales (18, 19) d'extrémité dudit tirant (15) forment, avec son âme, un Y et la rainure longitudinale (47) dudit second élément (5), déterminant lesdits rebords (50, 51), est en forme de V.

2. Dispositif d'assemblage selon la revendication 1, caractérisé par le fait que lesdits rebords longitudinaux (50, 51) dudit second élément (5) forment des nervures longitudinales susceptibles de pénétrer dans des gorges dudit premier élément (4) de forme complémentaire.

3. Dispositif d'assemblage selon la revendication 2, caractérisé par le fait que lesdits rebords longitudinaux (50, 51) dudit second élément (5) forment des nervures longitudinales de section en forme de V susceptibles de pénétrer dans des gorges dudit premier élément (4) de forme complémentaire.

4. Dispositif d'assemblage selon l'une quelconque des revendications précédentes, caractérisé par le fait que ladite partie formant âme dudit tirant (15) comprend au moins une nervure (20) adaptée pour être disposée dans une rainure (24) dudit premier élément (4), cette nervure et cette rainure s'étendant dans le sens de déplacement dudit tirant (15).

5. Dispositif d'assemblage selon l'une quelconque des revendications précédentes, ledit premier élément étant formé par un profilé, caractérisé par le fait que l'extrémité de ce profilé comprend deux branches (8, 9) délimitant ledit évidement longitudinal (11) recevant ledit tirant (15), ladite partie formant âme dudit tirant (15) comprenant au mons une nervure (20) adapte pour être disposée dans une rainure longitudinale (21) du profité constituant ledit premier élément (4).

6. Dispositif d'assemblage selon l'une quelconque des revendications précédentes, caractérisé par le fait que ledit tirant (15) comprend au moins une partie (44) déformable élastiquement dans le sens de son déplacement et adaptée pour prendre appui sur une paroi (41) dudit évidement (11) en vue de déplacer ledit tirant (15) vers l'extérieur dudit évidement (11).

7. Dispositif d'assemblage selon la revendication 6, caractérisé par le fait que ladite partie déformable élastiquement dudit tirant (15) comprend au moins un doigt (44) s'étendant sensiblement transversalement et susceptible de venir en appui contre la paroi de fond (41) dudit évidement (11).

8. Dispositif d'assemblage selon l'une quelconque des revendications précédentes, caractérisé par le fait que ledit axe comprend deux parties cylindriques séparées par une partie excentrée cylindrique (59) et que ledit passage transversal (53) dudit tirant est cylindrique pour recevoir, de chaque côté dudit évidement longitudinal, lesdites parties cylindriques dudit axe (57), ledit passage transversal (53) dudit tirant (52) présentant dans le sens de déplacement de ce dernier une partie en saillie vers l'intérieur (55) venant en contact sur la partie excentrée (59) dudit axe (57) de telle sorte que par rotation dudit axe ledit tirant peut être déplacé vers l'extérieur dudit évidement, tandis que l'une des parties cylindriques (60) dudit axe présente une rainure longitudinales (61) de telle sorte que cette partie cylindrique rainurée (60) peut traverser ledit passage transversal (53) dudit tirant pour disposer la partie excentrée (59) dudit axe dans ce passage transversal.

9. Dispositif d'assemblage selon l'une quelconque des revendications précédentes, caractérisé par le fait que la partie excentrée (31) dudit axe (27) et ledit passage (29) dudit tirant (15) présentent respectivement au moins une partie creuse et une partie en saillie située du côté opposé auxdites nervures d'extrémité, dudit tirant, ces parties étant adaptées pour pénétrer l'une dans l'autre en vue de verrouiller ledit axe (27) par rapport audit tirant (15).

10. Profilé adapté pour recevoir l'extrémité nervurée du tirant du dispositif d'assemblage selon l'une quelconque des revendications précédentes, caractérisé par le fait que ladite rainure longitudinale en forme de V (46) délimitant les deux rebords longitudinaux (48, 49) de section en forme de V est ménagée au soit de deux flancs adjacents (5a, 5b) de ce profilé, la paroi de l'une des branches de cette rainure longitudinale en forme de V opposée au rebord longitudinal adjacent étant dans le prolongement de la paroi de l'autre rebord longitudinal adjacent à son autre branche.

11. Profilé selon la revendication 10, caractérisé par le fait que les branches de ladite rainure longitudinale en forme de V sont parallèles auxdits flancs adjacents (5a, 5b).

12. Profilé selon l'une des revendications 10 ou 11, caractérisé par le fait qu'à au moins l'une de ses extrémités il comprend deux branches délimitant ledit évidement recevant l'âme dudit tirant, les extrémités de ces branches présentant chacune une rainure parallèle à cet évidement et de section en forme de V qui est complémentaire de la section en forme de V desdits rebords longitudinaux.

**Patentansprüche**

1. Element zum Verbinden eines ersten Bauteils (4) mit einem zweiten Bauteil (5), das aus einem Profil gebildet wird, das eine Nut (47) in Längsrichtung aufweist und in zwei Randleisten (50, 51) in Längsrichtung ausläuft, und einen Zuganker (15) mit einem Teil, der einen Kern bildet, der so ausgelegt ist, daß er gleitend in einer Aussparung (11) des genannten ersten Bauteils (4) montiert werden kann, sowie ein Teil, dessen Ende außerhalb der genannten Aussparung liegt und zwei einander gegenüberliegende Rippen (18, 19) aufweist, die seitlich vorstehen und innerhalb der Längsnut (47) des genannten zweiten Bauteils (5) liegen, umfaßt, sowie eine Achse (27), die so ausgebildet ist, daß sie in einer seitlichen Aussparung (13) des genannten ersten Bauteils (4) angeordnet werden kann und sich seitlich zur genannten Aussparung (11) erstreckt und einen Exzenterteil (31) umfaßt, der in einen Quergang (29) des Teils eindringt, der den Kern des genannten Zugankers (15) bildet, und durch Drehung der genannten Achse (27) in der genannten seitlichen Aussparung (13) den genannten Zuganker gegen das Innere der genannten Aussparung (11) verschiebt, so daß die genannten Längsrandleisten (50, 51) des genannten zweiten Bauteils (5) zwischen den Rippen (18, 19) des genannten Zugankers und der Wand des genannten ersten Bauteils (4) eingeklemmt werden, um die genannten zusammengefügten Bauteile (4, 5) festzuhalten, dadurch gekennzeichnet, daß die beiden seitlichen Rippen (18, 19) am Ende des genannten Zugankers (15) mit seinem Kern ein Y bilden, und die Längsnut (47) des genannten zweiten Bauteils (5), die die genannten Randleisten (50, 51) bestimmt, die Form eines V hat.

2. Verbindungselement gemäß Anspruch 1, dadurch gekennzeichnet, daß die genannten Längsrandleisten (50, 51) des genannten zweiten Bauteils (5) Längsrippen bilden, die in die Hohlkehle des genannten ersten Bauteils (4) in Komplementärform eindringen.

3. Verbindungselement gemäß Anspruch 2, dadurch gekennzeichnet, daß die genannten Längsrandleisten (50, 51) des genannten zweiten Bauteils (5) Längsrippen mit V-förmigem Querschnitt bilden, die in die Hohlkehlen des genannten ersten Bauteils (4) in Komplementärform eingreifen.

4. Verbindungselement gemäß einem beliebigen der vorstehenden Ansprüche, dadurch gekennzeichnet, daß der genannte Kernteil des Zugankers (15) wenigstens eine Rippe (20) umfaßt, die so ausgelegt ist, daß sie in eine Nut (24) des genannten ersten Bauteils (4) eingesetzt werden kann, wobei sich diese Nut und diese Rippe in Richtung der Verschiebung des genanten Zugankers (15) erstrecken.

5. Verbindungselement gemäß einem beliebigen der vorstehenden den Ansprüche, wobei das genannte erste Bauteil aus einem Profil besteht, dadurch gekennzeichnet, daß das Ende dieses Profils zwei Schenkel (8, 9) umfaßt, die die genannte Längsaussparung (11) begrenzen, die den genannten Zuganker (15) aufnimmt, wobei der genannte Teil, der den Kern des genannten Zugankers (15) bildet, wenigstens eine Rippe (20) umfaßt, die so ausgebildet ist, daß sie in eine Längsnut (21) des Profils, das das genannte erste Bauteil (4) bildet, eingesetzt werden kann.

6. Verbindungselement gemäß einem beliebigen der vorstehenden Ansprüche, dadurch gekennzeichnet, daß der genannte Zuganker (15) wenigstens einen in Richtung seiner Verschiebung elastisch verformbaren Teil (44) umfaßt, der so eingerichtet ist, daß er sich auf einer Wand (41) der genannten Aussparung (11) abstützen kann, um den genannten Zuganker (15) in der genannten Aussparung (11) nach außen zu verschieben.

7. Verbindungselement gemäß Anspruch 6, dadurch gekennzeichnet, daß der genannte elastisch verformbare Teil des genannten Zugankers (15) wenigstens einen Zapfen (44) enthält, der sich im wesentlichen quer erstreckt und sich gegen die Wand (41) der genannten Aussparung (11) abstützt.

8. Verbindungselement gemäß einem beliebigen der vorstehenden Ansprüche, dadurch gekennzeichnet, daß die genannte Achse zwei zylindrische Teile umfaßt, die durch ein Exzenterteil (59) getrennt werden, und daß der genannte Quergang (53) des genannten Zugankers zylindrisch ausgebildet ist, um von jeder Seite der genannten Längsaussparung die genannten Zylinderteile der genannten Achse (57) aufzunehmen, wobei der genannten Quergang (53) des genannten Zugankers (52) in Sinne der Verschiebung dieses letzteren einen nach innen (55) vorspringenden Teil enthält, der mit dem Exzenterteil (59) der genannten Achse (57) in Berührung steht, so daß durch die Drehung der genannten Achse der genannte Zuganker ins Innere der genannten Aussparung verschoben werden kann, während der eine der zylindrischen Teile (60) der genannten Achse eine Längsnut (61) aufweist, so daß dieser mit Nut versehene zylindrische Teil (60) sich durch den genannten Quergang (53) des genannten Zugankers erstreckt, um den Exzenterteil (59) der genannten Achse in diesem Quergang zu verschieben.

9. Verbindungselement gemäß einem beliebigen der vorstehenden Ansprüche, dadurch gekennzeichnet, daß der Exzenterteil (31) der genannten Achse (27) und der genannte Quergang (29) des genannten Zugankers (15) jeweils wenigstens einen Hohlteil und einen Vorsprungsteil aufweisen, die an der den genannten Außenrippen des genannten Zugankers gegenüberliegenden Seite angebracht sind, wobei diese Teile so ausgelegt sind, daß sie zwecks Verriegeln der genannten Achse (27) gegenüber dem genannten Zuganker (15) ineinandergreifen.

10. Profil, das so eingerichtet ist, daß es das mit den Randleisten des Zugankers versehene Ende des Verbindungselements gemäß einem beliebigen der vorstehenden Ansprüche aufnimmt, dadurch gekennzeichnet, daß die genannte V-förmige Längsnut (46), die die beiden Längsleisten (48, 49) mit V-förmigem Querschnitt abgrenzt, am obersten Punkt der beiden angrenzenden Flanken (5a, 5b) dieses Profils ausgegespart ist, wobei die Wand des einen der beiden Schenkel dieser Längsnut in V-Form gegenüber der anliegenden Längsrandleiste in Verlängerung der Wand der anderen Längsrandleiste angrenzend an ihren anderen Schenkel liegt.

11. Profil gemäß Anspruch 10, dadurch gekennzeichnet, daß die Schenkel der genannten V-förmigen Längsnut parallel zu den genannten angrenzenden Flanken (5a, 5b) liegen.

12. Profil gemäß einem der Ansprüche 10 oder 11, dadurch gekennzeichnet, daß wenigstens eines seiner Enden zwei Schenkel umfaßt, die die genannte Aussparung begrenzen und den Kern des genannten Zugankers aufnehmen, wobei die Enden dieser Schenkel jeweils eine Nut aufweisen, die parallel zu der genannten Aussparung verläuft und einen V-förmigen Querschnitt hat, der komplementär zum V-förmigen Querschnitt der genannten Längsrandleisten ist.

**Claims**

1. Device for connecting a first construction element (4) to a second construction element (5) formed by a section having a longitudinal groove (47) defining two longitudinal edges (50, 51) comprising a tie rod (15) having a part forming a web which is of a shape suitable to be slidably mounted in a recess (11) in the said first construction element (4) and a part whose end is external to the said recess and carries two opposite ribs (18, 19) which protrude laterally, this part being arranged in a longitudinal groove (47) of the said second element (5), the section also having an axle (27) of a shape suitable to be arranged in a lateral recess (13) of the said first element (4) and extending laterally to the said recess (11) and having an eccentric part (31) penetrating into a transverse passage (29) of the part of the said tie rod (15) which forms a web, and capable of displacing, by the rotation of the said axle (27) in the said transverse recess (13), the said tie rod towards the interior of the said recess (11) in such a manner as to grip the said longitudinal edges (50, 51) of the said second element (5) between the ribs (18, 19) of the said tie rod and the wall of the said first element (4) in order to retain the said construction elements (4, 5) connected, characterized in that the two lateral ribs (18, 19) at the end of the said tie rod (15) form, with the web of the latter, a Y, and the longitudinal groove (47) of the said second element (5), defining the said edges (50, 51), is in a V shape.

2. Connecting device according to Claim 1, characterized in that the said longitudinal edges (50, 51) of the said second element (5) form longitudinal ribs capable of penetrating into notches of complementary shape in the said first element (4).

3. Connecting device according to Claim 2, characterized in that the said longitudinal edges (50, 51) of the said second element (5) form longitudinal ribs of V-shaped section capable of penetrating into notches of complementary shape in the said first element (4).

4. Connecting device according to any one of the preceding claims, characterized in that the said part of the said tie rod (15) forming a web comprises at least one rib (20) of a shape suitable to be arranged in a groove (24) of the said first element (4), this rib and this groove extending in the direction of displacement of the said tie rod (15).

5. Connecting device according to any one of the preceding claims, the said first element being formed by a section, characterized in that the end of this section comprises two arms (8, 9) defining the said longitudinal recess (11) receiving the said tie rod (15), the said part of the said tie rod (15) which forms a web comprising at least one rib (20) of a shape suitable to be arranged in a longitudinal groove (21) of the section constituting the said first element (4).

6. Connecting device according to any one of the preceding claims, characterized in that the said tie rod (15) comprises at least one part (44) which is resiliently deformable in the direction of its displacement and is of a shape suitable to bear against one wall (41) of the said recess (11) in order to displace the said tie rod (15) towards the outside of the said recess (11).

7. Connecting device according to Claim 6, characterized in that the said resiliently deformable part of the said tie rod (15) comprises at least one projection (44) extending substantially transversally and capable of coming to bear against the back wall (41) of the said recess (11).

8. Connecting device according to any one of the preceding claims, characterized in that the said axle comprises two cylindrical parts separated by a cylindrical eccentric part (59), and in that the said transverse passage (53) of the said tie rod is cylindrical, to receive, from each side of the said longitudinal recess, the said cylindrical parts of the said axle (57), the said transverse passage (53) of the said tie rod (52) having, in the direction of displacement of the latter, a part (55) which projects towards the interior and comes into contact with the eccentric part (59) of the said axle (57), in such a manner that, by rotation of the said axle, the said tie rod can be displaced towards the outside of the said recess, while one of the cylindrical parts (60) of the said axle has a longitudinal groove (61) in such a manner that this grooved cylindrical part (60) can pass through the said transverse passage (53) of the said tie rod to arrange the eccentric part (59) of the said axle in this transverse passage.

9. Connecting device according to any one of the preceding claims, characterized in that the eccentric part (31) of the said axle (27) and the said passage (29) of the said tie rod (15) each have at least one hollow part and a projecting part situated on the opposite side to the said end ribs of the said tie rod, these parts being of a shape suitable to penetrate into one another in order to lock the said axle (27) with respect to the said tie rod (15).

10. Section of a shape suitable to receive the ribbed end of the tie rod of the connecting device according to any one of the preceding claims, characterized in that the said V-shaped longitudinal groove (46) defining the tvo longitudinal edges (48, 49) of V-shaped section is arranged at the vertex of two adjacent flanks (5a, 5b,) of this section, the wall of one of the arms of this longitudinal V-shaped groove opposite the adjacent longitudinal edge being in the extension of the wall of the other longitudinal edge adjacent to its other arm.

11. Section according to Claim 10, characterized in that the arms of the said longitudinal V-shaped groove are parallel to the said adjacent flanks (5a, 5b).

12. Section according to one of claims 10 or 11, characterized in that, at at least one of its ends, it comprises two arms defining the said recess receiving the web of the said tie rod, the ends of these arms each having a groove which is parallel to this recess and of V-shaped section, and which is complementary to the V-shaped section of the said longitudinal edges.

0 129 672

# FIG.2

# FIG.1

1

FIG.3

FIG.4

# FIG.5

# FIG.6